# EUROPEAN PATENT APPLICATION

(11) **EP 3 419 145 A1**
(43) Date of publication of application: **26.12.2018**
(21) Application number: 18178748.2
(22) Date of filing: 20.06.2018
(51) Int. Cl.: H02J 50/10

(54) **DEVICE AND CHARGER THEREFOR**

(30) Priority: 20.06.2017 GB 201709860
(71) Applicant: Armour Surveillance Securtiy Equipment and Technology Ltd, London W1J 8DW (GB)
(72) Inventor: DINAN, Richard, Beaconsfield, Bucks HP9 2TY (GB); FAWCETT, Patrick James, Worcestershire, WR13 6PL (GB); DAMERELL, William, Aldershot, Hants GU12 4JW (GB)
(74) Representative: HGF Limited

(57) **Abstract**

Embodiments of the present invention provide a kit comprising a device and a charger. The device comprises a housing, a receive coil and a rechargeable electrical power storage element. The housing defines a housing surface which housing surface is curved about a curve axis of the device. The rechargeable electrical power storage element is disposed within the housing and is connected to the receive coil. The receive coil is disposed within the housing and is curved about said curve axis of the device to a substantially similar extent as said housing surface, so that the housing surface and the receive coil are each of a complementary curvature. The receive coil comprises turns arranged about a receive coil axis, which receive coil axis is substantially orthogonal with respect to said housing surface. The charger for the device comprises a yoke and a transmit coil. The yoke is arranged to receive the device and comprises a curved yoke surface. The curved yoke surface is shaped to complement said housing surface of the device when the device is received by the yoke. The transmit coil comprises turns around a transmit coil axis and is disposed within the yoke. The transmit coil is curved to a substantially similar extent as said curved yoke surface. The transmit coil is connectible to a power source so as to generate a varying magnetic flux to intersect the receive coil of the device and induce a varying voltage therein to charge said electrical power storage element of the device. The receive coil axis and the transmit coil axis are arranged such that the receive coil and the transmit coil form an inductive coupling.

## Description

### TECHNICAL FIELD

The present disclosure relates to a kit and particularly, but not exclusively, to a kit comprising a device and a charger for the device. Aspects of the invention relate to a kit, to a device, and to a charger.

### BACKGROUND

Many prior art portable electronic devices, which may include, amongst other things, phones, audio players tablets, laptops and wearable devices, comprise a rechargeable electrical power storage element that requires a direct wired connection to a power supply, such as to a mains electricity supply, in order to charge said electrical power storage element. Charging via a direct wired connection between a portable electronic device and a power supply, such as a mains electricity supply, can be time consuming and cumbersome. Furthermore, portable electronic devices limited to such methods of charging require a user to carry around a compatible charging cable having a first end compatible with the portable electronic device and a second end compatible with a power supply, such as a mains electricity supply.

With the proliferation of electrical devices in the home and office, comes a mess of wires. This tangle of wire is frequently undesirable and many consumers seek ways of de-cluttering their personal and work spaces. Wireless charging helps to reduce the clutter of wires. Wireless charging is increasingly desirable as portable electronic device technology develops. Wireless charging technologies allow charging of portable electronic devices without the use of a direct wired connection to the device or to an electrical power storage element thereof.

Prior art inductive battery charging arrangements generally teach the use of substantially flat, planar, contact surfaces of both an inductive battery charger and of a portable electronic device to be charged by the inductive battery charger. For example, US5959433 relates to an inductive battery charger comprising a transmit coil that creates magnetic flux lines when the transmit coil is energized. The battery charger is arranged to charge a battery pack, through induction, when the rechargeable battery pack is placed on the battery charger. The battery pack includes a receive coil and an electrical current is induced therein when the battery pack is positioned on the battery charger. The charger comprises a flat surface for supporting the battery pack and the battery pack comprises a flat surface for positioning on the flat surface of the charger. The transmit coil and receive coil are substantially flat, other than being coiled about respective transmit coil and receive coil axes. The surfaces of the battery charger and the battery pack are generally coplanar.

Such contact surfaces generally limit the shape of a portable electronic device to be charged by an inductive charger and may be aesthetically undesirable, particularly in view of contemporary trends for slimmer, sleeker, more streamlined portable devices.

It is an object of embodiments of the invention to at least mitigate one or more of the problems of the prior art.

### SUMMARY OF THE INVENTION

Aspects and embodiments of the invention provide a kit, a device and a charger as claimed in the appended claims.

According to an aspect of the invention, there is provided a kit comprising:
a device comprising:
   a housing defining a housing surface which housing surface is curved about a curve axis of the device; and
   a rechargeable electrical power storage element; and
   a receive coil connected to said rechargeable electrical power storage element,
   wherein said receive coil is disposed within the housing and is curved about said curve axis of the device to a an extent so that the housing surface and the receive coil are each of a complementary curvature
   and wherein said receive coil comprises turns arranged about a receive coil axis, which receive coil axis is substantially orthogonal with respect to said housing surface; and
a charger for the device, the charger comprising:
   a yoke adapted to receive said device, the yoke having a curved yoke surface, which curved yoke surface is shaped to complement said housing surface of the device when the device is received by the yoke; and
   a transmit coil comprising turns around a transmit coil axis, the transmit coil disposed within the yoke and curved to an extent so that the curved yoke surface and the transmit coil are each of a complementary curvature,
   wherein said transmit coil is connectible to a power source so as to generate a varying magnetic flux to intersect the receive coil of the device and induce a varying voltage therein to charge said electrical power storage element of the device;
wherein the receive coil axis and the transmit coil axis are arranged such that the receive coil and the transmit coil form an inductive coupling.

Advantageously, the device may therefore be charged by the charger without a direct wired connection between the device and a power supply, despite the device and charger having a curved design. Surprisingly, curving the receive and transmit coils about a curve axis of the device does not substantially hinder the inductive coupling. Indeed providing the receive coil with a curvature that is substantially similar to the curvature of the housing surface, providing the curved yoke surface with a substantially similar curvature to the housing surface and providing the transmit coil with a curvature that is substantially similar to the curvature of the curved yoke surface means that the receive coil and the transmit coil are of substantially similar curvatures. This reduces a distance between the receive coil and the transmit coil, when the device is received on the curved yoke surface, which provides good coupling of the receive coil and the transmit coil. Advantageously, providing the storage coil on a curve means that space within the device can be more efficiently used. By providing the storage coil on a curve, this increases the number of available locations for the coil within the device, advantageously freeing up space within the device for other components. For example, the coil may be provided in a strap of the device, which may be a flexible strap. This frees up space within the device for providing other components which may be more constrained in terms of where they can be positioned within the device, such as rigid components, or components which cannot or should not flex.

The phrase 'good coupling' may be defined by a relatively high coupling factor. The coupling factor is proportional to the amount of flux that reaches the receive coil from the transmit coil. That is, the more flux that reaches the receive coil from the transmit coil, the higher the coupling factor. The coupling factor may be expressed as a value between 0 and 1, where 1 expresses perfect coupling, i.e. all flux generated at the transmit coil penetrates the receive coil. The coupling factor is determined by at least a distance between the receive and transmit coils and their relative dimensions. A shape of each of the receive coil and transmit coil and an angle between the receive coil and transmit coil axes also affects the coupling factor. A higher coupling factor increases efficiency of a power transfer from the transmit coil to the receive coil and reduces losses and heating of the kit.

As used herein, in some embodiments, the terms "transmit coil" and "receive coil" may refer to a charging coil and to a storage coil, respectively.

In some embodiments, the rechargeable electrical power storage element is disposed within said housing.

In some embodiments, one or both of the device and the charger comprise thermal overrun control circuitry for preventing overheating.

The transmit coil may be connectible to a signal generator. The signal generator may be arranged to generate a signal required to drive the transmit coil.

In some embodiments, the device comprises shielding. The shielding may be arranged for blocking or at least minimising stray electromagnetic energy from the receive coil. The shielding may be arranged for blocking or at least minimising stray electromagnetic energy from the transmit coil. Advantageously, shielding helps to prevent or at least minimise interference of a generated magnetic field with the device, charger or other nearby objects. Shielding also advantageously helps to minimise battery heating and minimise or prevent circulation of current in metallic parts of the device.

Magnetic field interferences are increasingly common in electronic devices due to a number of factors, such as reduced separation distances of printed circuit boards, integrated circuits and many other sensitive components. Indeed, the extended use of magnetically coupled communication technologies (such as Qi-WPC, NFC, RFID, PMA, A4WP, WCT, for example) leads to more complex component layout and proximity considerations. It is important to manage and predict magnetic flux flow and thereby improve efficiency of power transfers, increase distances of near field communications and avoid additional unwanted coupling effects which could lead to losses or noise. The shielding of the present invention advantageously helps to address these problems.

In some embodiments, the transmit coil is backed with or coated in magnetic shielding.

In some embodiments, the shielding comprises one or more ferrites. Ferrites may advantageously help to prevent, or at least to manage, stray electromagnetic energy. Ferrite materials are able to influence a magnetic field in their proximity. Ferrite materials have a greater permeability to magnetic fields than ambient air around them and therefore concentrate the magnetic field lines. Intensity and shape of a field can therefore be influenced by concentrating the magnetic field by strategic placement of ferrite materials within said device. In this way, the invention provides improved efficiency of the energy transfer and improved coupling of the storage and transmit coils.

In some embodiments, the receive coil axis and the transmit coil axis are substantially aligned when the device and the charger are inter-engaged. In some embodiments, the receive coil axis and the transmit coil axis are substantially coincident. In some embodiments, one or more dimensions of each of the receive coil and the transmit coil may be similar. The one or more dimensions may comprise a coil diameter. The one or more dimensions may comprise an area in a plane substantially orthogonal to the respective coil axis, which area is occupied by the respective coil and includes an area within boundaries defined by the respective coil. In some embodiments, the receive coil is arranged within the device and the transmit coil is arranged within the charger so as to minimise a distance between the receive coil and the transmit coil when the device is received on the charger. This may, in some embodiments, be achieved by arranging the transmit coil proximal to or adjacent to the curved yoke surface. Advantageously, alignment or coincidence of the receive and transmit coil axes, matched receive and transmit coil dimensions and reduced distance between the receive and transmit coils provides good coupling between the receive coil and the transmit coil.

In some embodiments, the complementary curvature of the housing surface and the receive coil may comprise the housing surface and the receive coil arranged with matched curvatures. The matched curvatures may be matched to within at least 90% of a same radius of curvature.

In some embodiments, the form of one or both of the transmit coil and the receive coil need not be a common two dimensional geometric form, such as an Arc. For example, in some embodiments, one or both of the coils may comprise a three dimensional shape, such as a parabolic dome shape. The transmit and receive coils may be shaped to complement each other, but may be offset by thickness of their respective housings.

In some embodiments, the device comprises a management and protection circuit for controlling one or both of: coupling of the receive and transmit coils and the amount of current being directed to the power storage element. The management and protection circuit may be arranged to convert and regulate the voltage and current supplied to the power storage element. The circuit may comprise means for protecting the electrical power storage element from overcharging. In some embodiments, the circuit may be arranged to manage temperatures within cells through regulation of power issued to the power storage element. The circuit may also be arranged to provide visual feedback, for example by means of a Light Emitting Diode (LED), to indicate a charging status of the device. The charging status may comprise whether or not the device is in a charging state. The charging status may comprise whether the device is fully charged.

In some embodiments, the kit comprises a retaining means for retaining the device on the charger. Advantageously, the retaining means helps to maintain alignment of the receive coil and the transmit coil and minimises a distance between the respective receive and transmit coils. Alignment and minimal distance between the receive and transmit coils achieves a good coupling between the respective coils.

Optionally, said retaining means comprises a clamp mounted to said yoke and arranged such that said device is receivable between the clamp and the yoke. Advantageously, the clamp helps to maintain contact throughout a charging operation. This helps to maintain alignment of the recieve coil and the transmit coil and minimises a distance between the respective receive and transmit coils. Alignment and minimal distance between the receive and transmit coils each contribute to achieving a good coupling between the respective coils. Good coupling advantageously increases efficiency of a power transfer from the transmit coil to the receive coil and reduces losses and heating of the kit. Clamps are also advantageously generally cheap and easy to manufacture. In some embodiments, the clamp may be a spring biased clamp.

Optionally, said clamp comprises a deformable cushion on a contact surface of the clamp which contact surface contacts said device in use. Advantageously, the cushion removes or at least minimises any damage to the device, such as to an outer surface of the device, which damage may occur as a result of the clamping, whilst nevertheless maintaining contact between device and charger. Maintaining contact helps to maintain alignment of the receive coil and the transmit coil and minimises a distance between the respective receive and transmit coils. Alignment and minimal distance between the receive and transmit coils each contribute to achieving good coupling between the respective coils.

In some embodiments, the clamp is curved about a clamp curve axis to an extent that the clamp and the housing surface are of a substantially similar curvature. Advantageously, the curvature of the clamp, the device and the charger may all be of a complementary nature. This contributes to the broad advantage of maintaining proximity between and maintaining alignment of the receive coil and transmit coil, thereby contributing to improved coupling between the receive coil and the transmit coil.

In some embodiments, said curved yoke surface comprises locating means for guiding the device onto the charger. Advantageously, said locating means helps to ensure alignment of the receive coil and the transmit coil, by guiding a user to properly align the device on the charger. Alignment of the coils contributes to achieving good coupling between the respective coils. Good coupling advantageously increases efficiency of a power transfer from the transmit coil to the receive coil and reduces losses and heating of the kit. In some embodiments, the locating means may comprise a recess. The recess may be shaped to correspond to a portion of the device where the receive coil is located. Alternatively, the locating means may comprise a pair of guide rails for guiding the device onto the charger. The locating means may alternatively comprise a textured surface or one or more visual markings indicating how the device should be lined up with the charger. The locating means may include any combination of any one or more of the above optional features.

In some embodiments, said device comprises locating means for guiding the device onto the charger. Advantageously, said locating means helps to ensure alignment of the receive coil and the transmit coil, by guiding a user to properly align the device on the charger. Alignment of the coils contributes to achieving good coupling between the respective coils. Good coupling advantageously increases efficiency of a power transfer from the transmit coil to the receive coil and reduces losses and heating of the kit. In some embodiments, the locating means may comprise a recess. The recess may be shaped to correspond to a portion of the device where the receive coil is located. Alternatively, the locating means may comprise a pair of guide rails for guiding the device onto the charger. The locating means may alternatively comprise a textured surface or one or more visual markings indicating how the device should be lined up with the charger. The locating means may include any combination of any one or more of the above features.

In some embodiments, both the curved yoke surface and the device may each comprise locating means for guiding the device onto the charger. The locating means of each of the curved yoke surface and the device may be cooperative locating means, such as corresponding notches and detents or such as corresponding grooves and flanges, for example. The locating means on each of the device and curved yoke surface may additionally or alternatively comprise a visual marker indicating a location of the coil. The visual marker may comprise any one or more of a textured surface, one or more markings or a structural discontinuity, such as one or more recesses or flanges. Advantageously, locating means on each of the curved yoke surface and the device helps to guide a user to align the device on the charger such that the receive coil and the transmit coil are aligned. Alignment of the coils contributes to achieving good coupling between the respective coils.

In some embodiments, the kit comprises a stand connected to the charger, the stand for supporting the charger and the device. Advantageously, the stand supports the device and charger throughout charging. This helps to at least partially maintain the arrangement in a fixed position and therefore helps to maintain alignment of the receive coil and the transmit coil and maintains a distance between the respective receive and transmit coils. Alignment and minimising a distance between the receive and transmit coils each contribute to achieving good coupling between the respective coils.

In some embodiments, the stand houses circuitry for generating the signal required to drive the transmit coil.

Optionally, the stand may comprise a substantially flat surface for supporting the device and the charger. Advantageously, the substantially flat surface provides a stable surface for the device and charger throughout charging. This helps to at least partially maintain alignment of the receive coil and the transmit coil and maintains a distance between the respective receive and transmit coils, thereby providing good coupling between the respective coils.

In some embodiments, the device is a wearable device.

In some embodiments, the device is a location tracker, such as a device arranged to track a location of a user or wearer. The device may be a child tracking bracelet.

Optionally, the device is arranged to be worn on a user's wrist. The device may be a band-like device to be worn on the user's wrist in a similar manner as a wristwatch or bracelet.

In some embodiments, the device is a watch. In some embodiments, the device is a fitness tracker.

In some embodiments, the device comprises a remote control. In some embodiments, the remote control may be a remote control for keyless entry to a vehicle. In some embodiments, the remote control may be a remote control for keyless entry to a building or to a room within a building.

In some embodiments, the device may be a prison security bracelet.

In some embodiments, the remote control may be a remote control for keyless entry to a lockable volume. The lockable volume may comprise any one or more of: a storage unit, a building, a room within a building, a safety deposit box, a garage, a shed, a cupboard and a vault.

In some embodiments, the remote control may be a remote control for keyless entry to a lockable element. The lockable element may be a locking means, such as an electronic padlock. The lockable element may be receivable by a variety of components, such as a suitcase, a rucksack, or a backpack, for example.

According to another aspect of the invention, there is provided a device for a kit as above described.

According to another aspect of the invention, there is provided a charger for a kit as above described.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described by way of example only, with reference to the accompanying drawings, in which:
Figure 1 shows a perspective side view of elements of a kit according to an embodiment of the invention;
Figure 2 shows a perspective view of elements of the kit of Figure 1;
Figure 3 shows a partial cross section of a detail of a kit according to an embodiment of the invention;
Figure 4 shows a perspective view of a detail of a kit according to an embodiment of the invention;
Figures 5A and 5B show perspective views of retaining means according to embodiments of the invention;
Figures 6A, 6B, 6C and 6D show perspective views of kits according to embodiments of the invention; and
Figure 7 shows a schematic circuit diagram(s) according to an embodiment of the invention.

### DETAILED DESCRIPTION

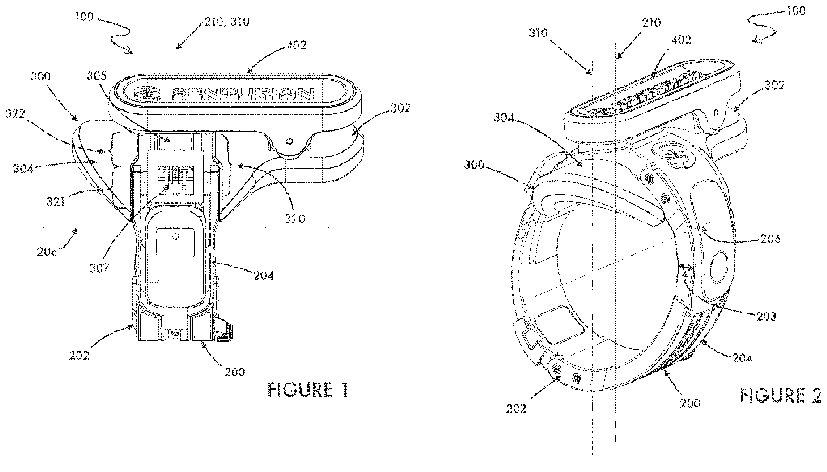

Figures 1 to 4 and 5A show parts a kit 100 according to some embodiments of the invention. The kit 100 comprises a device 200 and a charger 300. The device 200 is arranged to be worn on a user's wrist. The device 200, in some embodiments, is a band-like device, arranged to be worn on the user's wrist in a similar manner as a wristwatch or bracelet. The device 200 comprises a housing 202, defining a housing surface 204. The housing surface 204 is curved about a curve axis 206 of the device. The curvature of the housing surface 204 may be arranged to complement a curvature of a user's wrist. The device 200 comprises a rechargeable electrical power storage element 305 connected to a receive coil 208 (not shown in Figures 1 and 2) and disposed within the housing 202. The rechargeable electrical power storage element 305 may store an energy capacity of approximately 40 milliampere hours (mAh), for example. A suitable rechargeable electrical power storage element may be a lithium ion polymer battery, for example.

Although the device 200 substantially as herein described, at least with reference to the embodiments illustrated in the Figures, is arranged to be worn on a user's wrist, it will be appreciated that the device 200 may comprise any one of a variety of wearable devices, not necessarily for wearing on a user's wrist. Indeed, the device 200 may be any one of a variety of portable electronic devices in general, which electronic device may not necessarily be a wearable device.

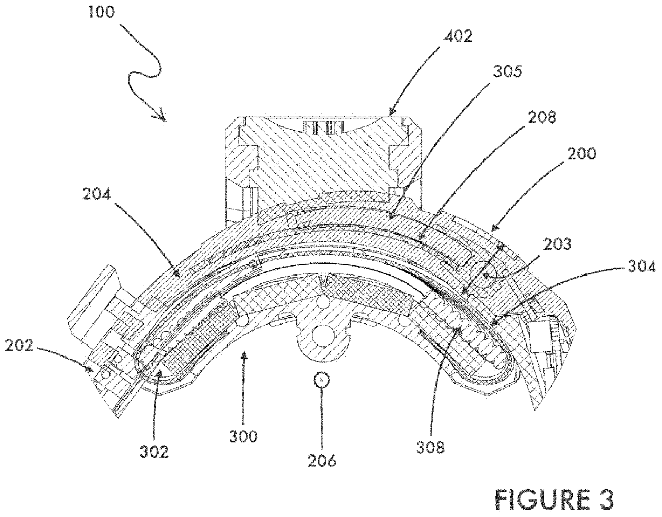

With reference to Figure 3, the receive coil 208 is disposed within the housing 202. The receive coil 208 may be, arranged to fit within the housing 202 in an efficient packing volume so as to minimise a height dimension 203 of the housing. In some embodiments, this is achieved by the coil 208 being disposed within the housing 202 so as to be curved in a same direction as the housing surface 204, and about said curve axis 206 of the device 200. The receive coil 208 is curved to a substantially similar extent as said housing surface 204, so that the housing surface 204 and the receive coil 208 are each of complementary curvature. By complementary curvature, it is meant that the receive coil 208 and the housing surface 204 each have a substantially similar radius of curvature. The radii of curvature of the housing surface 204 and the receive coil 208 may be matched to within at least 75% of a same radius of curvature, or preferably, to within at least 90% of a same radius of curvature. Said receive coil 208 comprises turns arranged about a receive coil axis 210. In some embodiments of the invention, the receive coil axis 210 is substantially orthogonal with respect to said housing surface 204.

Returning again to Figures 1 to 4 and 5A, the charger 300 of the kit 100 comprises a yoke 302 adapted to receive the device 200. The yoke 302 has a curved yoke surface 304, which yoke surface 304 is shaped to complement the housing surface 204 of the device 200 when the device 200 is received by the yoke 302. The charger 300 comprises a transmit coil 308 comprising turns around a transmit coil axis 310. The transmit coil 308 is disposed within the yoke 302 so as to be curved to a substantially similar extent as the curved yoke surface 304, so that the curved yoke surface 304 and the transmit coil 308 are each of a complementary curvature. By complementary curvature, it is meant that the transmit coil 308 and the curved yoke surface 304 each have a substantially similar radius of curvature and are curved in a same direction. The radii of curvature of the curved yoke surface 304 and the transmit coil 208 may be matched to within at least 75% of a same radius of curvature, or preferably, to within at least 90% of a same radius of curvature.

The receive coil 208 and the transmit coil 308 are arranged such that the receive coil 208 and the transmit coil 308 form an inductive coupling. The transmit coil 308 of the charger 300 is connectible to a power source, such as a mains electricity supply. An alternating current from the power source is transmittable to the transmit coil 308 so as to generate a varying magnetic flux to intersect the receive coil 208 of the device 200, thereby inducing a varying voltage in the receive coil 208, to charge the electrical power storage element (not shown) of the device 200.

The receive coil 208 and transmit coil 308 being arranged to form an inductive coupling is achieved by particular arrangements of the receive coil axis 210 and the transmit coil axis 310. For example, the receive coil axis 210 and the transmit coil axis 310 are arranged in a substantially aligned arrangement. The aligned axes 210, 310 must be close enough to each other such that a flux induced in the transmit coil 308 may be flux linked to the receive coil 208. The alignment of the receive coil axis 210 and the transmit coil axis 310 may comprise the axes 210, 310 being a least substantially coincident, although this is not necessarily a strict requirement of the kit 100.

One or more dimensions of each of the receive coil 208 and the transmit coil 308 are substantially similar. For example, the one or more substantially similar dimensions may comprise a coil diameter of the transmit coil 308 and a coil diameter of the receive coil 208. The coil diameter is a diameter of one complete turn of the respective coil 208, 308. The coil diameter defines an area in a plane substantially orthogonal to the respective coil axis 210, 310.

In some embodiments of the invention, the receive coil 208 and the transmit coil 308 are arranged within the device 200 and within the charger 300, respectively, so as to minimise a distance between the receive coil 208 and the transmit coil 308 when the device 200 is received on the charger 300. This may, be achieved by arranging the transmit coil 308 proximal to or adjacent to the curved yoke surface 304 and/or by arranging the receive coil 208 proximal to or adjacent to the curved housing surface 204.

As noted above, alignment or coincidence of the receive coil axis 210 and transmit coil axis 310, matched receive coil 208 and transmit coil 308 dimensions and reduced distance between the receive coil 208 and transmit coil 308 each contribute to providing good inductive coupling between the receive coil 208 and the transmit coil 308, leading to a more efficient kit 100.

For safety purposes, in some embodiments, the kit may be arranged to manage the charging of the power storage element to prolong its life and to prevent overheating and fire risk. In some embodiments, the device comprises a management and protection circuit 307 which is arranged to control one or both of: coupling of the receive and transmit coils 208, 308 and the amount of current being directed to the power storage element 305. The management and protection circuit 307 may convert and regulate the voltage and current supplied to the power storage element 305. The circuit 307 may comprise overcharge protection for the power storage element 305. Circuit 307 may manage temperatures within cells through regulation of power issued to the power storage element 305. The circuit 307 may also be arranged to provide visual feedback, for example by means of a Light Emitting Diode (LED), to indicate that the device 200 is successfully coupled and is charging.

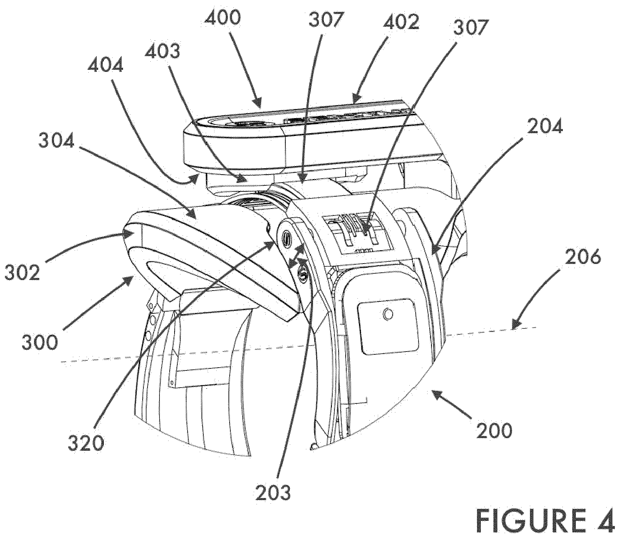

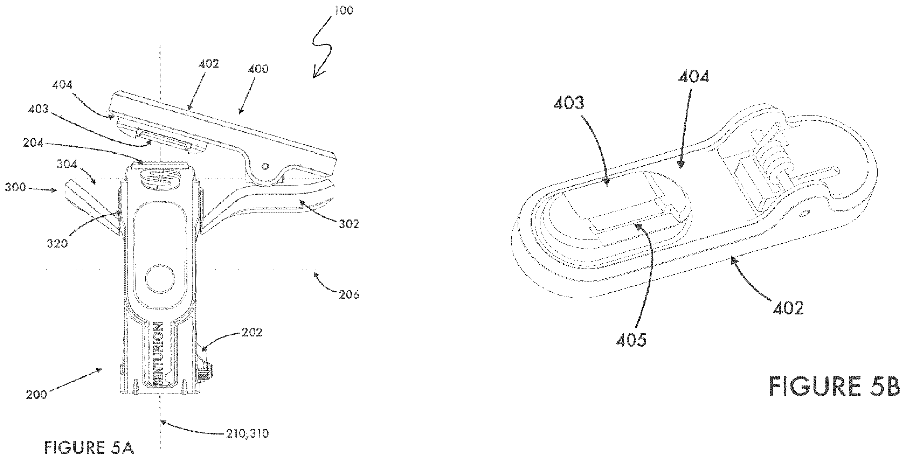

With reference to the Figures, the kit 100, in some embodiments, comprises a retaining means 400 for at least temporarily retaining the device 200 on the charger 300. The retaining means 400 comprises a clamp 402 mounted to said yoke 302. The clamp 402 is arranged such that the device 200 is receivable between the clamp 402 and the yoke 302. The clamp 402 is moveable between an open position (demonstrated in Figure 5A), for receiving the device 200 and a closed position (demonstrated in Figures 1, 2, 4, 6A and 6B), for retaining the device 200 between the yoke 302 and the clamp 402. The clamp may be spring biased to the closed position. Turning now to Figures 4, 5A and 5B, the clamp 402 comprises a deformable cushion 403 on a contact face 404 of the clamp 402, which contact face 404 faces said device 200 in use. The deformable cushion 403 functions to protect the device 200 when the clamp 402 retains said device 200 against the yoke 302. The deformable cushion 403 may comprise recesses or other surface profile features 405 for accommodating surface profiles of the housing 202 of the device 200. Although the Figures show the clamp 402 as a substantially flat component, in some embodiments, the clamp 402 may be curved about a clamp curve axis. The clamp may be of a substantially similar curvature to a curvature of the housing surface 204 and/or the curved yoke surface 304. The clamp curve axis may be substantially parallel to the curve axis 206 of the housing 200.

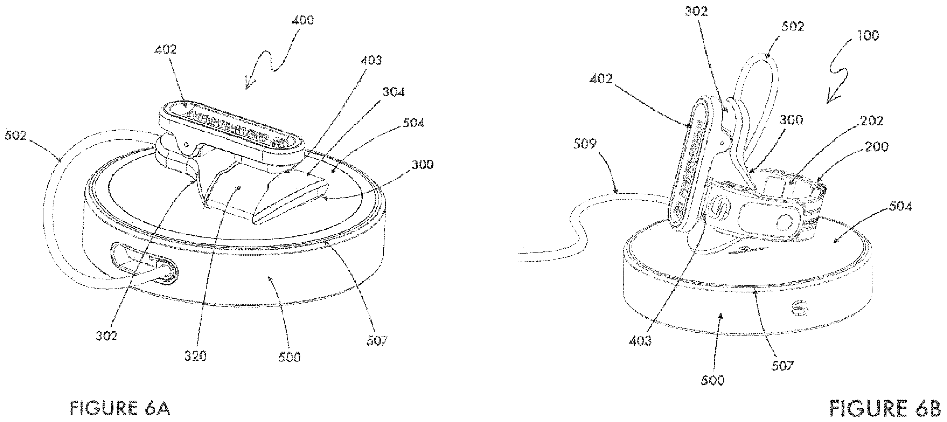

The kit 100 may comprise locating means for guiding the device 200 onto the charger 300. In the embodiments illustrated, the locating means is provided by one or both of the charger 300 and the device 200. The locating means functions to ensure alignment of the receive coil 208 and the transmit coil 308 when the device 200 is received on the charger 200. To that end, the locating means may also function to prevent the device 200 from being positioned on the charger 300 in a position in which the receive and transmit coils 208, 308 are not substantially aligned. For example, with reference to Figure 1, the locating means may be provided as a recess 320 in the curved yoke surface 304. The recess 320 is arranged in a location on the curved yoke surface 304 so as to indicate a relative position of the transmit coil 308. The recess 320 is arranged to receive the device 200 at least partially therein in a close fit and is shaped to correspond to a portion of the device 200. The recess 320 comprises a relatively wider section 321 and a relatively narrower section 322. The wider section 321 and the narrower section 322 are dimensioned to match a corresponding wider section of the housing 202 of the device 200 and a narrower section of the housing 202 of the device 200, respectively. The relatively wider section and relatively narrower section of the housing 202 may be arranged so as to indicate a relative position of the receive coil 208. To that end, the locating means may also be provided by the device 200 by means of the varying dimensions of the housing 202 that corresponding to the sections 321, 322 of the recess 320. Additionally, or alternatively, a surface of the recess 320 may comprise a texture which texture differs from a texture of the rest of the curved yoke surface 304. For example, Figure 6A shows a recess 320 comprising a substantially matte surface, whilst the rest of the curved yoke surface 304 comprises a substantially gloss surface. Although the embodiments illustrated comprise locating means in the form of a recess 320 and a textured surface, it will be appreciated that a variety of other locating means may be provided on one or both of the device 200 and the charger 300, such as any one or more of: visual markings, such as coloured portions, lugs, flanges, rails, detents, or other structural discontinuity in one or both of the housing 202 and the yoke 302. The list is not intended to be definitive.

In some embodiments of the invention (not illustrated), the device 200 comprises a means for accessing a locked volume, such as a vehicle, a building, a room within a building, a safety deposit box, a garage, a cupboard, a shed or a vault, for example. The accessing means may be a remote key fob that constantly, intermittently or selectively generates a radio signal capable of being detected by a radio receiver in the locked volume, whereby unlocking may be activated. For example, as a user wearing or carrying the device 200 approaches the locked volume, the volume may be unlocked, enabling entrance to the volume. Where the locked volume is a vehicle, as the device 200 approaches the vehicle, the ignition may additionally be enabled, allowing just the press of a button, for example, in the vehicle to start the vehicle operating. The device may have comprise a button to unlock the locked volume when the device 200 is at a distance from them. In some embodiments of the invention, the means for accessing a lockable volume may additionally or alternatively be arranged for accessing a lockable element. The lockable element may be an electronic locking means, such as an electronic padlock. The lockable element may be receivable by a variety of components, such as a suitcase, a rucksack, or a backpack, for example. The means for accessing may comprise a radio frequency identification (RFID) tag for keyless unlocking of the lockable element.

With reference to Figures 6A to 6D, the kit 100 further comprises a stand 500 for supporting the charger 300 and the device 200 thereon. The stand 500 may also be arranged for electrically stimulating the charger 300 and the device 200. With particular reference to Figures 6A and 6B, the stand 500 is connected to the charger 300 and comprises a substantially flat surface 504. The stand 500 functions to support the device 200 and charger 300 throughout charging, to maintain the charger 300 and device 200 in a stable arrangement, thereby helping to maintain alignment of the receive coil 208 and the transmit coil 308. The flat surface 504 functions to improve the stable support function of the stand for the device 200 and charger 300. The flat surface 504 may enable a user to easily and rapidly divest the device 200 without carefully needing to position it on the charger.

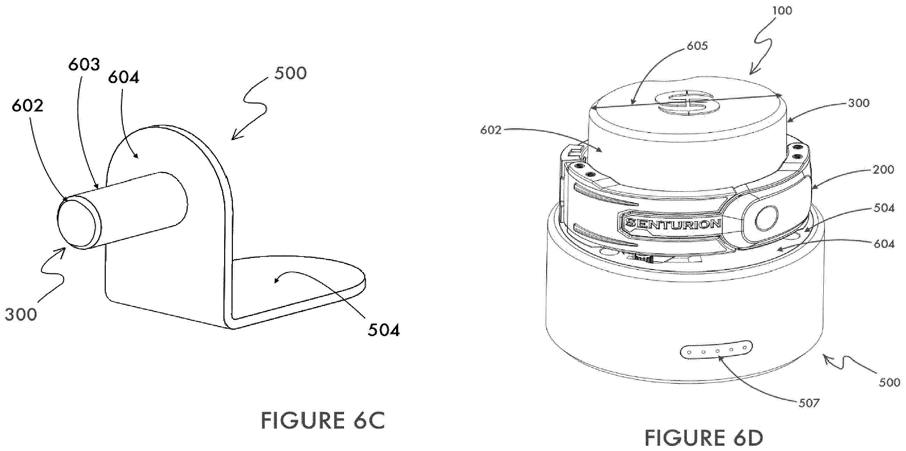

With reference to Figures 6C and 6D, in some embodiments, the charger 300 and the stand 500 are a single integral unit. The stand 500 may comprise an upstanding spigot 602, extending from a surface 604. The transmit coil may be provided within the spigot 602, proximal to a surface of the spigot.

In some embodiments, such as the embodiment shown in Figure 6C, the stand 500 comprises a flat surface 504 for resting on a surface. The spigot 602 extends from a surface 604 which surface 604 is substantially perpendicular to flat surface 504. The spigot may extend along an axis (not shown) substantially parallel to an axis of the flat surface 504. The spigot 602 may be substantially cylindrical, so as to complement a curvature of the device 200. The transmit coil 308 may be close to or substantially coincident to an outer wall of said cylindrical spigot 602, and the receive coil 208 may be close to or substantially coincident to an inner wall of said device 200.The transmit coil may be provided in a top outer wall 603 of the spigot, such that when the device 200 is hung on the spigot 602, the transmit and receive coils are brought into alignment and wireless charging may commence.

In some embodiments, such as the embodiment shown in Figure 6D, the spigot 602 may be substantially cylindrical, having a diameter 605 substantially equal to an internal diameter of the device 200. In this way, the device 200 may be placed over the spigot in a close fit, to charge the electrical power storage element 305. The transmit coil 308 may be close to or substantially coincident to an outer wall of said cylindrical spigot 602, and the receive coil 208 may be close to or substantially coincident to an inner wall of said device 200.

The stand 500 may comprise a power source (not shown), which power source is connectible to the charger 300 via a wire 502. The power source of the stand 500 may therefore function to generate a varying magnetic flux in the transmit coil 308. Due to the arrangement of the transmit coil 308 and receive coil 208 when the device 200 is received on the charger 300, the varying magnetic flux generated in the transmit coil 308 intersects the receive coil 208 of the device 200, to induce a varying voltage therein to charge the electrical power storage element of the device 200. At least a portion of the power source of the stand 500 may be used to power a light 507 on the stand, which light may be arranged to change colour, flash, turn off, or turn on, when the electrical power storage element of the device 200 is fully charged. In some embodiments, other visual and/or tactile means may additionally or alternatively be used to indicate a charging status of the device 200.

Alternatively, the stand 500 may itself be connectible to a power source, such as a mains electricity supply, via a cable 509. At least a portion of the power source to which the stand 500 is connected may be used to power a light 507 on the stand, which light is arranged to change colour, flash, turn off, or turn on, when the electrical power storage element of the device 200 is fully charged.

The power source may be used to power circuitry, which may be provided within the stand 500 and/or within the charger 300, to stimulate the transmit coil 308. The circuitry may also manage the charging process, ensuring a good coupling between the transmit and receive coils 308, 208 and may additionally or alternatively manage waveform and power supplied to the transmit coil 308. The circuitry may be arranged to drive the transmit coil 308 when it is determined that the device 200 is present. The circuitry may be arranged to cease transmission when it is determined that the device 200 is removed, thereby saving power and eliminating unnecessary electromagnetic emissions.

The stand 500, or the charger 300, in some embodiments, may include power adaption means. For example, the stand 500 may be arranged to convert a mains voltage to a lower voltage. The stand may additionally or alternatively regulate from an alternate current to a direct current prior to generating a signal to drive the transmit coil.

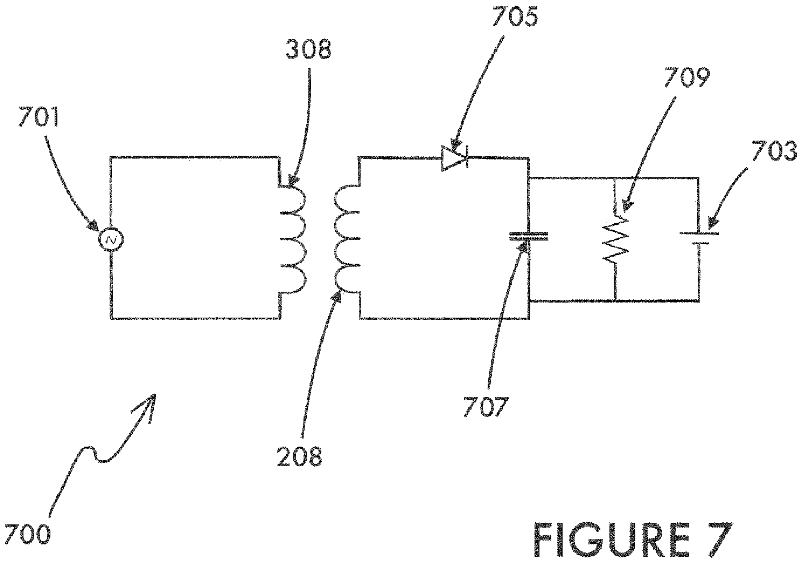

Figure 7 shows a simplified exemplary circuit diagram 700 according to an embodiment of the invention. In use, the charger 300 may be connected to a power source 701, such as a mains electricity supply, however, a variety of power sources may be used. The kit 100 may therefore comprise a power inverter (not shown) for first converting a power source to an AC voltage. The AC voltage is sent to the transmit coil 308 by a transmitter circuit (not shown). AC flowing within the transmit coil 308 generates a varying magnetic flux which extends to and intersects the receive coil 208 when the device 200 is received by the charger 300. The magnetic flux in the receive coil 208 induces an AC voltage in the receive coil 208, which may be used to charge the electrical power storage element 703 of the device 200. In some embodiments, the device 200 may comprise a rectification means, such as a rectifier circuit. The rectifier circuit may include one or more diodes 705, to convert the AC voltage induced in the receive coil 208 to a DC output voltage. The rectifier circuit may also comprise a smoothing means, such as a capacitor 707, to filter or smooth the DC voltage outputted by the rectifier. The device 200 may comprise a resistor 709 to limit the output current flowing to the electrical power storage element 703. In this way, the electrical power storage element 703 is rechargeable.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), orto any novel one, or any novel combination, of the steps of any method or process so disclosed. The claims should not be construed to cover merely the foregoing embodiments, but also any embodiments which fall within the scope of the claims.

## Claims

1. A kit comprising:
a device comprising:
a housing defining a housing surface which housing surface is curved about a curve axis of the device; and
a rechargeable electrical power storage element disposed within said housing; and
a receive coil connected to said rechargeable electrical power storage element,
wherein said receive coil is disposed within the housing and is curved about said curve axis of the device to an extent so that the housing surface and the receive coil are each of a complementary curvature,
and wherein said receive coil comprises turns arranged about a receive coil axis, which receive coil axis is substantially orthogonal with respect to said housing surface; and
a charger for the device, the charger comprising:
a yoke adapted to receive said device, the yoke having a curved yoke surface, which curved yoke surface is shaped to complement said housing surface of the device when the device is received by the yoke; and
a transmit coil comprising turns around a transmit coil axis, the transmit coil disposed within the yoke and curved to an extent so that said curved yoke surface and the transmit coil are each of complementary curvature,
wherein said transmit coil is connectible to a power source so as to generate a varying magnetic flux to intersect the receive coil of the device and induce a varying voltage therein to charge the electrical power storage element of the device,
wherein the receive coil axis and the transmit coil axis are arranged such that the receive coil and the transmit coil form an inductive coupling.

2. A kit as claimed in claim 1, comprising a retaining means for retaining the device on the charger.

3. A kit as claimed in claim 2, wherein said retaining means comprises a clamp mounted to said yoke and arranged such that said device is receivable between the clamp and the yoke.

4. A kit as claimed in claim 3, wherein said clamp comprises a deformable cushion on a contact surface of the clamp which contact surface contacts said device in use.

5. A kit as claimed in claim 3 or claim 4, wherein said clamp is curved about a clamp curve axis to an extent that the clamp and the housing surface are of a substantially similar curvature.

6. A kit as claimed in any of the preceding claims, wherein said curved yoke surface comprises locating means for guiding the device onto the charger.

7. A kit as claimed in any of the preceding claims, wherein said device comprises locating means for guiding the device onto the charger.

8. A kit as claimed in any of the preceding claims comprising a stand connected to the charger, the stand for supporting the charger and the device.

9. A kit as claimed in any of the preceding claims, wherein the yoke surface is a surface of a spigot, over which the device is arranged to be placed.

10. A kit as claimed in any preceding claim, wherein the device is a wearable device.

11. A kit as claimed in claim 10, wherein the device is a device arranged to be worn on a user's wrist.

12. A kit as claimed in any preceding claim, wherein the device comprises a remote control for keyless entry to a vehicle.

13. A kit as claimed in any preceding claim, wherein the device comprises a remote control for keyless entry to a building or to a room within a building.

14. A device for a kit as claimed in any of claims 1 to 13.

15. A charger for a kit as claimed in any of claims 1 to 13.
